# EUROPEAN PATENT APPLICATION

(11) **EP 2 372 424 A1**
(43) Date of publication of application: **05.10.2011**
(21) Application number: 10250689.6
(22) Date of filing: 31.03.2010
(51) Int. Cl.: G02B 6/44, H02G 1/08, F16L 55/165, B08B 9/032, B08B 9/053, E21B 23/08

(54) **Clearing blockages in a pipe by blowing air through a duct moved in the same pipe prior to fibre installation**

(71) Applicant: British Telecommunications Public Limited Company, London EC1A 7AJ (GB)
(72) Inventor: The designation of the inventor has not yet been filed
(74) Representative: Chan, Robin

(57) **Abstract**

A method of installing an optical fibre in a pre-installed underground pipe (1) between two locations, process comprising: installing a duct (11) through the underground pipe by: attaching an adaptor (15) to one end of said duct; attaching the other end of said duct to an air compressor (13); blowing air through said sub-duct as it is moved along the length of said underground pipe, the air being blown out of the adaptor at a sufficient pressure so as to dislodge debris (7) within the pipe; and once the sub-duct has traversed the duct, removing the adaptor and blowing the optical fibre along the length of the sub-duct between the two locations.

## Description

The present invention relates to optical fibre transmission lines and in particular to a method of installing an optical fibre line.

### Background

Optical fibre cables carrying optical fibre transmission lines were originally installed by the same methods as conventional metal conductor cables, those methods using involve pulling the cable with a pulling rope through a previously laid cable duct.

However, unlike the metal conductors of a conventional cable, the optical fibres are easily damaged by tensile stress. Such stress may, for example, propagate micro-cracks, leading to fibre breakage in the long term.

To overcome this problem, a method and apparatus to install optical fibre transmission lines into optical fibre tubes or ducts using a "blowing" technique in which the viscous drag provided by the high speed flow of a fluid medium, often air or nitrogen, is known from EP108590 and subsequent publications.

Whether by rope pulling or blowing, the optical fibres and their optical fibre ducts are installed within existing ducts/pipes which used to carry copper cable. These pipes typically having a diameter of 4-inch (100mm) and may be several hundred meters long, for example from an exchange to a customer's premises. Often these existing pipes have been in place for a long time and therefore may contain blockages of dust or gravel. Furthermore if water seeps into the pipe then this mixes with the dust to create mud blockages.

The pipes must be cleared before a fibre can be installed. A known method of clearing any blockages is called rodding whereby the blockages are removed by pushing a glass fibre reinforced epoxy rod into the pipe to physically unblock the pipe. However rods are heavy and bulky, for example an 11mm diameter, 100m long rod weighs about 40kg and takes up significant space. It is therefore often impractical to

The present invention aims to overcome the above problems associated with rodding and using external specialist firms.

In one aspect, the present invention provides a method of installing an optical fibre in a pre-installed underground pipe between two locations , process comprising: installing a duct through the underground pipe by: attaching an adaptor to one end of said duct; attaching the other end of said duct to an air compressor; blowing air through said sub-duct as it is moved along the length of said underground pipe, the air being blown out of the adaptor at a sufficient pressure so as to dislodge debris within the pipe; and once the sub-duct has traversed the duct, removing the adaptor and blowing the optical fibre along the length of the duct between the two locations.

In another aspect, the present invention provides an apparatus for dislodging a blockage in a pre-installed underground pipe between two locations , the apparatus comprising: a duct for delivery along the underground pipe; a nozzle head adaptor attached at a first end of the duct; a fibre blow head attached to a second end of the duct and operable for delivering compressed air along the length of the duct; wherein, in use, air is blown through the duct as it is moved along the length of said underground pipe, the air being blown out of an exit port of the nozzle head adaptor at a sufficient pressure so as to dislodge debris within the pipe; and once the duct has traversed the pipe, the duct is left in place for carrying an optical fibre.

The present invention will now be described by way of example and with reference to the following figures in which:
Figure 1 shows a blocked underground pipe, running between a customer premises and an exchange junction box, to which the first embodiment can be applied;
Figure 2a shows an operation of unblocking the blocked pipe illustrated in Figure 1 using a duct and nozzle arrangement in accordance with a first embodiment;
Figure 2b shows the pipe illustrated in Figure 2a which has been unblocked using a duct and nozzle arrangement in accordance with a first embodiment;
Figure 3a shows a cross sectional view of a first nozzle adaptor design;
Figure 3b shows a cross sectional view of a second nozzle adaptor design;
Figure 3c shows a cross sectional view of a third nozzle adaptor design;
Figure 4 is a flowchart showing the operation to install an optical fibre in accordance with a first embodiment;
Figure 5 shows the functional components for clearing a pipe according to a second embodiment;
Figure 6 shows a nozzle adaptor according to the second embodiment; and
Figure 7 is a flowchart showing the operation to install an optical fibre in accordance with a first embodiment.

### Description

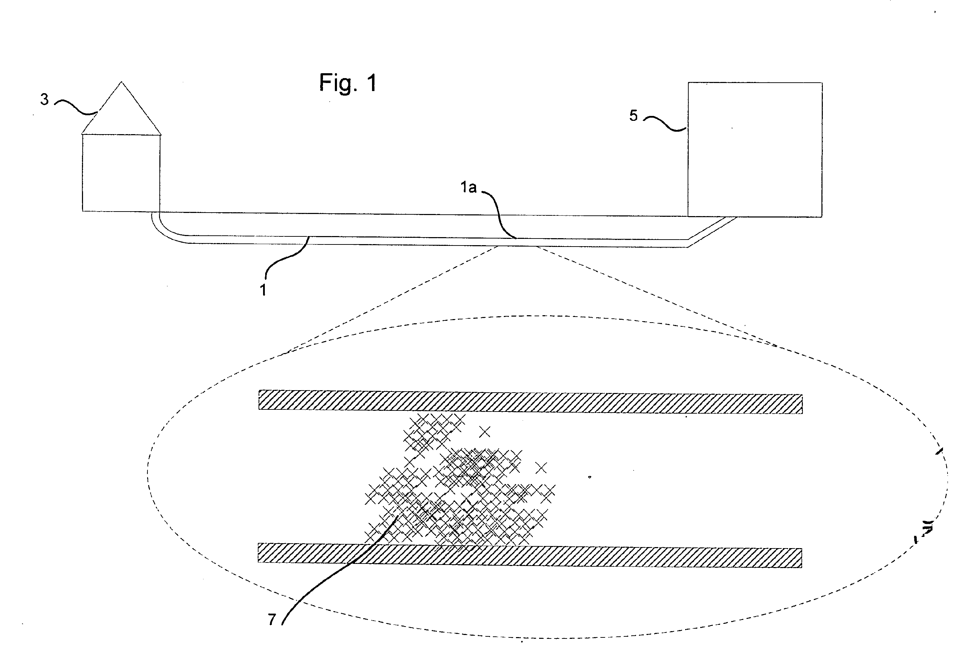

Figure 1 shows an underground pipe running between a customer premises 3 and an exchange junction box 5. The cross sectional cut out portion of pipe 1a, shows a blockage 7 and there may be several blockages throughout the length of the pipe 1. The blockage may be caused by sand, grit or leaves that have entered the pipe at some point during installation, or after installation due to damage. These blockages must be removed before an optical fibre transmission line can be installed.

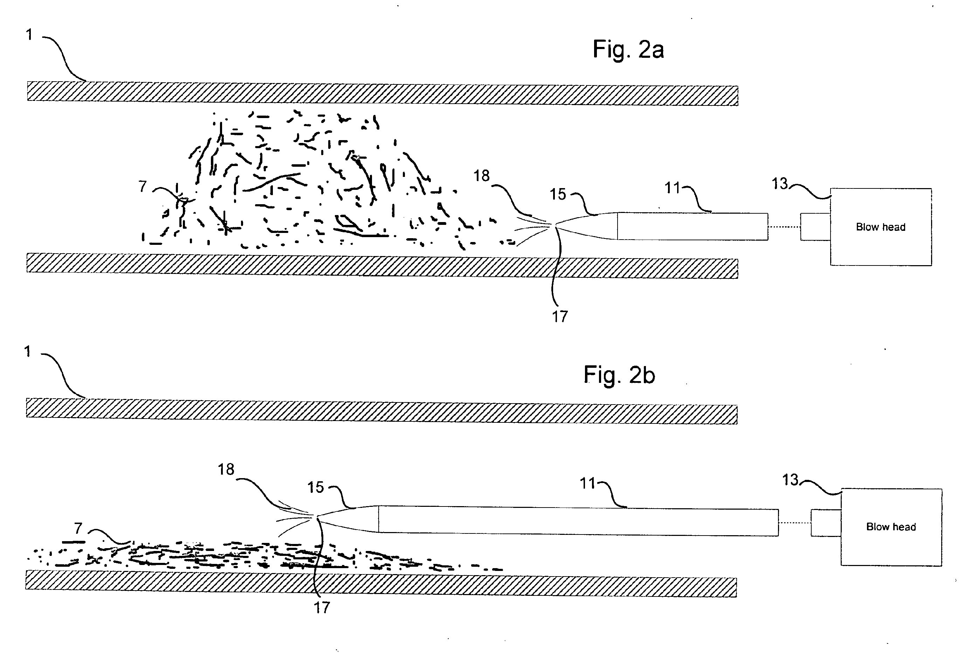

In this embodiment, air is blown down the pipe to remove the blockage. In particular, the air is delivered via a duct 11 which will eventually be used to carry the optical fibre. Figures 2a and 2b show the operation of the pipe unblocking. A duct 11 which is smaller than the pipe 1 is attached at one end, to an air pump 13, in this embodiment, the air pump is a fibre blow head as described in co-pending patent application WO2006/103419 incorporated herein by reference. A nozzle adaptor 15 is attached to the other end of the duct 11. The end of the duct which is attached to the nozzle adaptor 15 is fed into the pipe 1 and pushed along until it reaches the customer premises 3. The fibre blow head 13 provides pressurized air along the duct 11 at a pressure of up to six bar and the nozzle adaptor 15 has a forward outlet port 17 to direct the jets of compressed air 18 to dislodge blockages 7.

As shown in Figure 2b, the high pressure blowing action causes the blockage to be removed as the duct and nozzle head assembly is advanced along the duct.

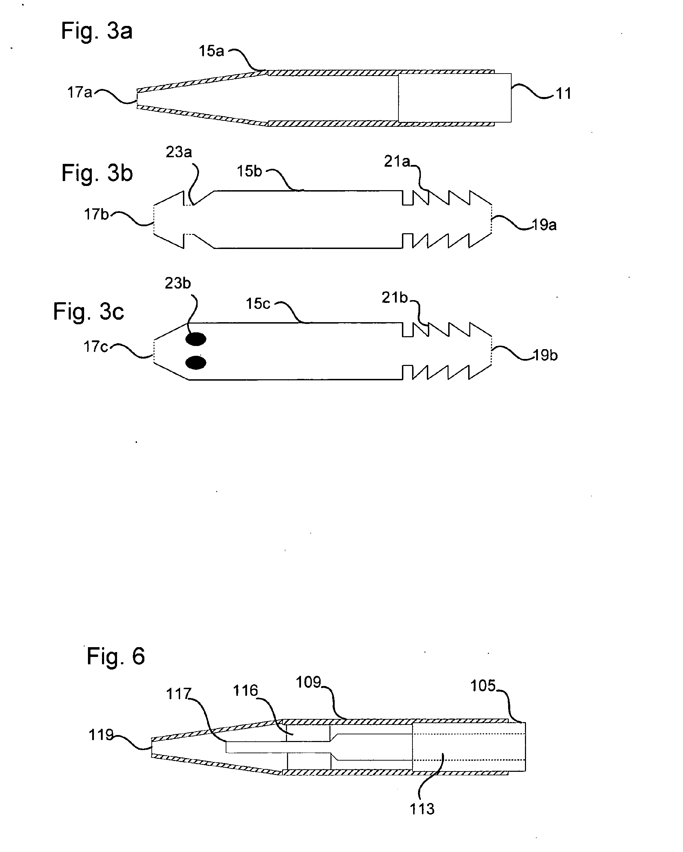

Figures 3a to 3c respectively show a first, second and third design of nozzle adaptor 15.

Figure 3a shows a simple nozzle adaptor 15a attached at one end to a duct 11. The body 15a of the nozzle adaptor is generally cylindrical with a length of 60.62mm, an outer diameter of 15.12mm and an inner diameter of 10.18mm. The internal diameter is slightly smaller than the external diameter of the duct to enable a tight fit between the two components. The section of the body furthest from the duct port is tapered and 35.80mm in length. This section ends with an air outlet port 17a from which air is expelled in use.

Figure 3b shows a second design of nozzle adaptor15b. This Figure shows an air inlet port 19 is located at the opposed end of the air outlet port 17b. The nozzle adaptor 15b attaches to the duct 11 using a ribbed push-fitting 21a and in contrast to the first nozzle adaptor design 15, the second nozzle adaptor fits to the internal diameter of the duct 11 via push-fitting 21a.

The second nozzle adaptor 15b also includes reverse facing vents 23a. These vents are reverse facing as they face opposite to the direction of travel of the duct 11 along the pipe 1. The reverse facing vents 23a help to clear debris within the pipe 11 which has been dislodged by the air leaving the air outlet port 17. The cross sectional view shown in Figure 3b shows two diametrically opposed reverse facing vents.

Figure 3c shows a third design of nozzle adaptor 15c. In this design, the nozzle adaptor 15c has reverse facing vents 23b arranged in pairs. As with the second design, these help to remove dislodged debris from around the outlet port 17c of the nozzle adaptor 15c. As a secondary effect, they also provide slight propulsion of the duct 11 along the pipe.

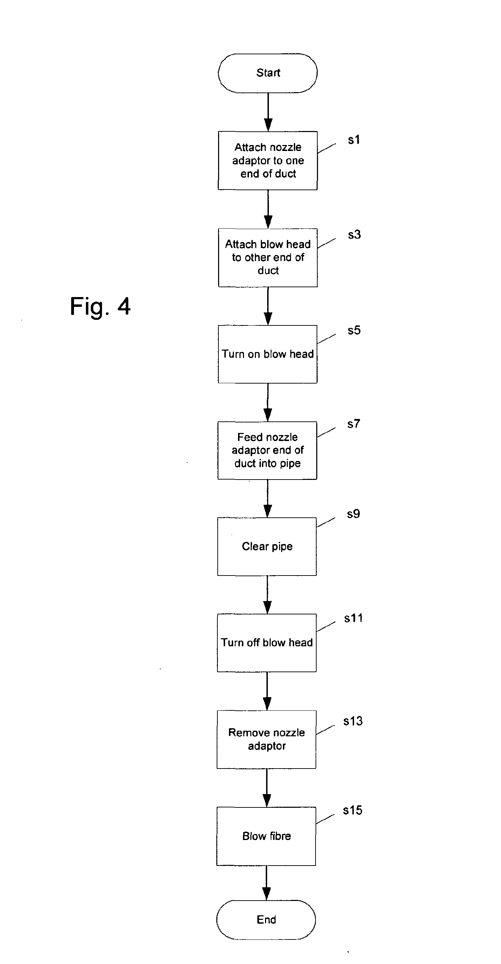

Figure 4 is a flowchart showing the operation to install an optical fibre into an underground pipe in accordance with the first embodiment.

In step s1 the nozzle adaptor 15 is attached to one end of the duct 11 which will be used to carry an optical fibre. To provide the air source, the blow head 13 is attached to the other end of the duct in step s3 and turned on it step s5 to provide a jet of compressed air along the duct. This operation is the same as a conventional fibre installation operation and will not be described.

In step s7, the nozzle adaptor end of the duct is fed into the underground pipe and it is fed along the pipe to clear it of blockages in step s9. This process continues until the duct 11 has traversed the pipe 1 to the user premises 3.

In step s11 the blow head is switched off and in step s13 the nozzle adaptor is removed from the duct 11, in this case by cutting the attached section of duct 11.

Having cleared the pipe 1 of blockages to such an extent that the duct 11 now extends the length of the pipe 1, the same duct 11 can now be used to carry fibre. Therefore in step s15, optical fibre is blown into the duct 11 as is known in the art.

The first embodiment provides an improved method of installing optical fibre within existing underground pipes. Blockages are common and existing methods of rodding or calling specialists to unblock the pipe are cumbersome, time consuming and add to the expense of fibre deployment. Using the method of the first embodiment, a fibre installer does not need much extra equipment over the standard fibre installation inventory to be able to clear the pipe and lay the duct 11 in a single operation. This results in cheaper, faster and more convenient fibre installation.

### Second embodiment

In the first embodiment, compressed air is blown along the duct and out of a nozzle adaptor to dislodge debris and unblock a pipe. Using air is very effective where the blockage is due to dry particles such as gravel or dust. However, where moisture has entered the pipe due to water damage, jets of high pressure air alone is not sufficient to unblock the pipe.

In the second embodiment, a mixture of air and water is blown out of the nozzle adaptor to break up wet silt or mud that has accumulated within the underground pipe. In this case, the aim is to clear a path through the blockage, rather than try to completely remove the blockage as in the first embodiment.

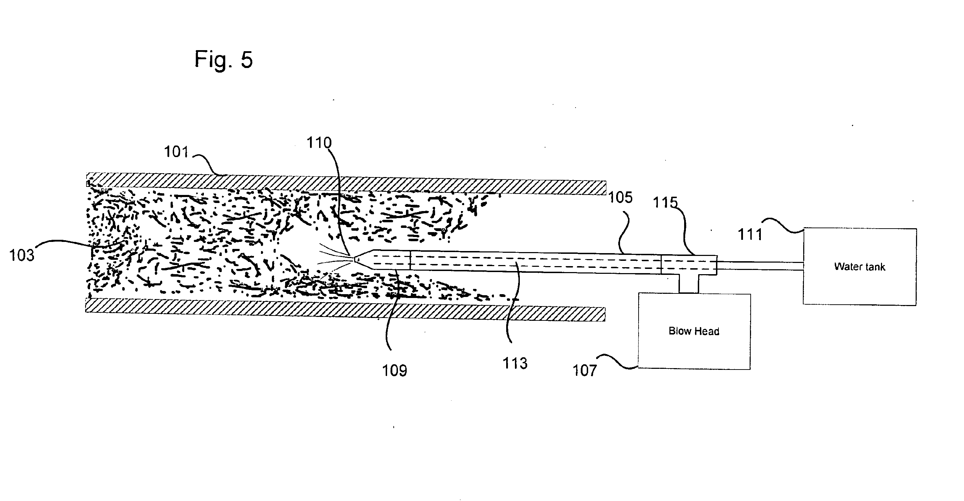

Figure 5 shows the functional components according to the second embodiment. A pipe 101 has a blockage 103. The components required to run a duct 105 through the pipe 101 include a blow head 107 as already explained in the first embodiment and a modified nozzle adaptor 109 which is similar to the nozzle adaptors of the first embodiment. However, in order to provide a high pressure water spray 110, further components are required. A water tank 111 contains a supply of about ten litres of water. A water tube 113 having a diameter which is smaller than the internal diameter of the duct extends from the water tank along the length of the duct to the nozzle adaptor 109. A T joint adaptor 115 provides the connection between the water tank 111 and the blow head 107 so that the water tube 113 is carried with the compressed air in the duct 105.

Figure 6 shows the structure of the modified nozzle adaptor 109. The duct 105 and water tube 113 are attached to one of the nozzle adaptor 109. A water adaptor 116 is first attached to the free end of the water tube 113. The water adaptor 116 is shaped to hold the end of the water tube 113 in place within the nozzle adaptor 109 but still allow air to flow to the end of the nozzle adaptor 109.

The water adaptor 116 has a water outlet 117 around which high pressure air can flow. Water flows out of the water tube 113 and is accelerated out of the water outlet 117 by the surrounding high pressure air towards the outlet port 117 of the nozzle adaptor 109, thereby creating a water/air spray which can create a path through the blockage 103 as shown in Figure 5.

As with the first embodiment, once the nozzle adaptor 109 and duct assembly has travelled the length of the pipe 101, the duct 105 can be left in place as a conduit for a blown optical fibre.

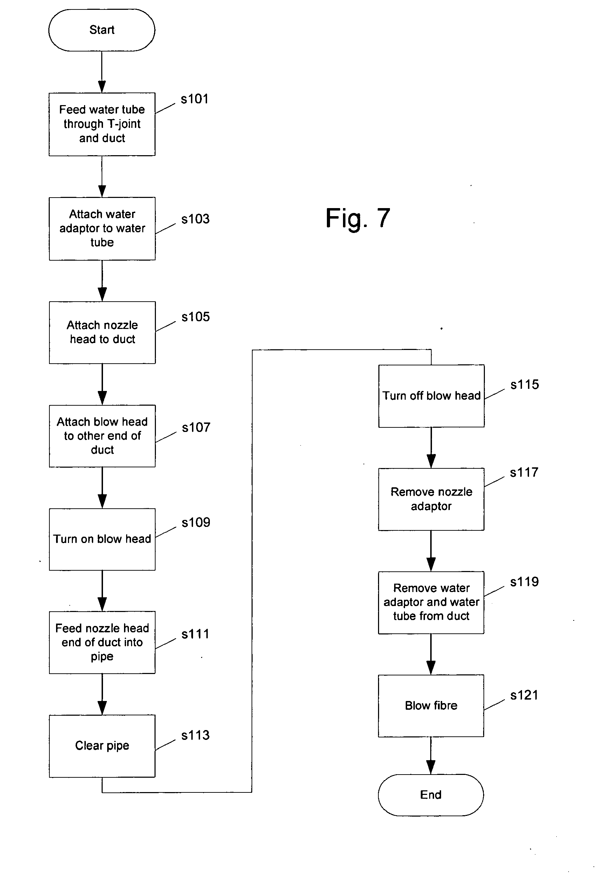

Figure 7 is a flowchart showing the operation to install an optical fibre into an underground pipe in accordance with the second embodiment.

In step s101 the water tube 113 is passed through the T joint adaptor 115 and then fed through the length of the duct 105 until it reaches the end of the duct 105. In step s103, the water adaptor 116 is fitted to the water tube 113. In step s105, the nozzle adaptor 109 is attached to the water adaptor 116 and the duct 105 which will be used to carry an optical fibre. As in the first embodiment, to provide the air source, the blow head 107 is attached to the other end of the duct 105 in step s107 and turned on it step s109 to provide a jet of compressed air along the duct 105 and around the water tube 116. This operation is the same as a conventional fibre installation operation and will not be described.

In step s111, the nozzle adaptor end of the duct 105 is fed into the underground pipe and moved along the pipe 101 to clear it of blockages in step s113. This process continues until the duct 105 has traversed the pipe 103.

In step s115 the blow head 107 is switched off and in step s117 the nozzle adaptor is removed from the duct 105, in this case by cutting the attached section of duct 105.

The in step s119 the water adaptor 116 and water tube 113 are removed from the duct 105.

Having created a path through any blockages in the pipe 101 so that the duct 105 now extends the length of the pipe 101, the same duct 105 can now be used to carry an optical fibre. Therefore in step s121, optical fibre is blown into the duct 105 as is known in the art.

The second embodiment provides an improved method of installing optical fibre within existing underground pipes where a wet blockage has occurred although it is equally applicable to dry blockages.

### Alternatives and modifications

In the embodiments the pipes connected a customer premises to a local exchange. It will be understood that the invention is applicable to any fibre deployment between two locations such as fibre-to-the-home, fibre-to-the-curb or fibre-to-the-exchange where a pipe blockage may be present.

In the embodiments a number of nozzle adaptors were described. It will be readily apparent to the skilled reader that the examples are non-limiting and other designs are possible with the same effects.

In the embodiments, compressed air was blown down the duct. Other inert gases could be used such as nitrogen. Similarly, other liquids could be used instead of water in the second embodiment.

## Claims

1. A method of installing an optical fibre in a pre-installed underground pipe between two locations , process comprising:
installing a duct through the underground pipe by:
attaching an adaptor to one end of said duct;
attaching the other end of said duct to an air compressor;
blowing air through said sub-duct as it is moved along the length of said underground pipe, the air being blown out of the adaptor at a sufficient pressure so as to dislodge debris within the pipe; and
once the sub-duct has traversed the duct, removing the adaptor and blowing the optical fibre along the length of the duct between the two locations.

2. A method according to claim 1, further comprising:
installing a liquid carrying sub-duct along the length of the duct; and
delivering liquid via said liquid carrying sub duct at the same time as the compressed air is blown through the duct so that the liquid mixes with the air so as to improve the ability to dislodge debris within the pipe.

3. Apparatus for dislodging a blockage in a pre-installed underground pipe between two locations , the apparatus comprising:
a duct for delivery along the underground pipe;
a nozzle head adaptor attached at a first end of the duct;
a fibre blow head attached to a second end of the duct and operable for delivering compressed air along the length of the duct;
wherein, in use, air is blown through the duct as it is moved along the length of said underground pipe, the air being blown out of an exit port of the nozzle head adaptor at a sufficient pressure so as to dislodge debris within the pipe; and
once the duct has traversed the pipe, the duct is left in place for carrying an optical fibre.

4. Apparatus according to claim 4, further comprising:
a liquid carrying sub-duct extending along the length of the duct; and
a liquid tank;
wherein the nozzle adaptor head has a liquid/air mixer such that liquid mixes with the compressed air in the vicinity of the exit port of the nozzle head.
